# EUROPEAN PATENT APPLICATION

(11) **EP 2 204 733 A1**
(43) Date of publication of application: **07.07.2010**
(21) Application number: 08173109.3
(22) Date of filing: 30.12.2008
(51) Int. Cl.: G06F 9/44, H04M 1/725, G06T 3/40, G09G 3/20, H04M 1/247, G06F 19/00, G09G 5/00

(54) **Graphics display**

(71) Applicant: Rapid Mobile Media Ltd., Edinburgh EH2 3ES (GB)
(72) Inventor: Marshall, Richard, Edinburgh, EH2 3ES (GB)
(74) Representative: Hewett, Jonathan Michael Richard

(57) **Abstract**

The current invention presents a method and system that changes the size of a set of graphics, designed to have a different size from a physical display screen size, to a usable size on the display, automatically adapting the layout of the graphical elements so as to preserve their appearance and interactivity. This is achieved by the identification of points at which the graphics may be stretched without deforming the content, the specification of interactivity areas that must be preserved, and software components that ensure that additional graphics can be layered without damaging the appearance.

## Description

The present invention relates to a method of displaying graphics and particularly, but not exclusively, to a method of adapting a graphical interface to fit a plurality of display screen sizes while preserving the layout and interactivity of the interface.

Portable devices such as mobile phones currently exist having a number of different screen sizes. These devices are typically capable of downloading and executing software applications which use these screens to interact with the end user. As the power of these devices increases, in the form of faster processors and larger memories, applications presented to the end user have increasingly complex graphical interfaces.

Creating applications is therefore greatly complicated by the plurality of physical screen sizes available, as it is difficult to develop an interface which will be suitable for use on all devices. This problem is further exacerbated by device manufacturers that do not allow applications to access the whole of a display screen area, where certain areas of the screen are reserved for their own use. These reserved areas may differ from device to device, making it difficult to plan the layout of an interface in advance.

The conventional approach is to manually adapt the graphical components to fit on the displays of each specific device. The graphics redesign is usually done manually as simple scaling of the entire image will result in unacceptable distortion. The disadvantage of this, however, is that a considerable number of small variations may be required in order to ensure that all of the graphics components fit correctly on the display, and this creates significant cost in the development process or limits the range of devices on which the software can be made available.

Embodiments of the present invention aim to greatly reduce the number of manually-created versions of the graphics which are required when adapting graphics for a display, by performing automatic resizing of graphics in a way which preserves the layout (in terms of the relative sizes of components) and interactivity of the various elements of a graphical interface. An advantage of these embodiments is that the costs of creating software applications can be greatly reduced.

According to an aspect of the present invention, there is provided a method of displaying a graphical interface on a device, comprising generating a graphical interface, determining whether the generated interface has a size different from the size of the display of the device, determining an adjustable portion of the generated interface having a pixel array the size of which can be changed in the horizontal and/or vertical direction, and converting the size of the generated interface to the display size by adding/removing pixels to/from the adjustable portion of the interface, if it is determined that the size of the generated interface is different from the display size.

According to a further aspect of the present invention, there is provided an apparatus for displaying a graphical interface having a plurality of elements, comprising a display, means for generating a graphical interface, and means for converting the size of the generated graphical interface to the size of the display, in which the conversion means is arranged to determine an adjustable portion of the generated interface having a pixel array the size of which can be changed in the horizontal and/or vertical direction, and to change the size of the interface to the display size by adding/removing pixels to/from the adjustable portion of the interface.

The method and system described are applicable to the creation of software that operates on portable devices such as mobile phones. Specifically, the current invention provides a method of simplifying the deployment of graphically-rich software to portable devices by automating the adaptation of complex graphics to the plurality of screen sizes found in these devices.

The adjustable portion of the interface may be a horizontal or vertical line, in which the vertical width of a horizontal line can be adjusted and the horizontal width of a vertical line can be adjusted. Such a selection of "stretch lines" facilitates linear resizing transformations.

The determination of the adjustable portion may be performed by identifying a predetermined colour in the adjustable portion of the interface. The predetermined colour may be one which is not used in any of the components of the graphical interface, which makes the stretch line easy to identify, while ensuring that the layout and interactivity of the graphical interface can be preserved.

In addition to the definition of the adjustable portions, it is also possible to specify the position of a predetermined graphical element of the interface at which the number of pixels cannot be changed in the resizing operation. Such an element may be the location of a user interaction zone of the interface. This technique has the advantages of preserving the interactivity of user interaction elements already present in the display, and of enabling software to layer additional components on the graphical interface in the interaction zones, with the correctly sized features.

The adjustable portion may extend between two user interaction zones, so that the two zones are separated during a resizing operation while preserving the size of the zones themselves.

The definition of the positions of the adjustable portion and interaction zones may be stored in a configuration file at the device for easy access by a processor of the device when performing graphics resizing. Such predetermination provides an alternative to including the stretch lines in the graphics themselves.

Pixels may be added to the adjustable portion in a stretching operation, having the same colour as neighbouring pixels of the interface. This preserves the appearance of the graphics after resizing.

Embodiments of the invention will now be described by way of example, with reference to the accompanying drawings, of which:
Figure 1 shows a schematic representation of a portable device according to an embodiment of the present invention;
Figure 2 shows a schematic representation of the processing unit of the device shown in Figure 1;
Figure 3 shows a sample graphic interface displayed by the device of Figure 1;
Figure 4 shows the graphic of Figure 3 with two simple horizontal stretch lines and one complex horizontal stretch line;
Figure 5 shows the graphic of Figure 4 after vertical stretching based on the horizontal stretch lines;
Figure 6 shows the sample graphic of Figure 3 with a complex vertical stretch line;
Figure 7 shows the graphic of Figure 6 after horizontal stretching based on the vertical stretch line;
Figure 8 shows a sample configuration file used in an embodiment of the present invention; and
Figure 9 shows a flow chart of the graphics size conversion method of an embodiment of the present invention.

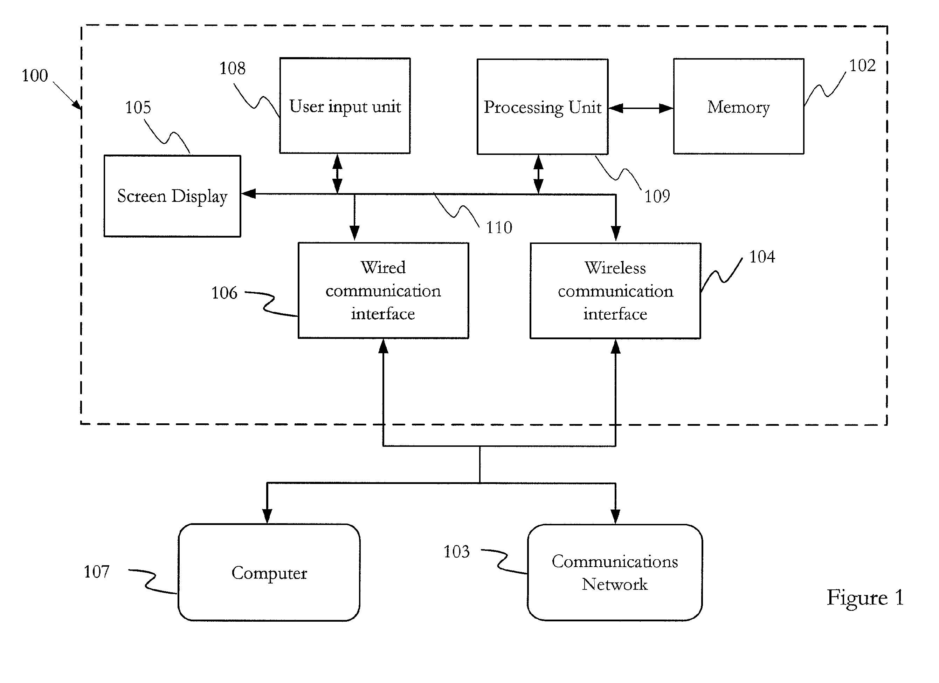

Figure 1 shows components of a portable device 100 according to an embodiment of the present invention. The portable device 100 consists of a screen 105 to display content, driven by a processing unit 109, and a memory 102. In this description, "memory" is used in general terms to indicate one or both of a RAM, serving as the main memory of the device 100, and a ROM, for storing an operating program. The device 100 also contains a user input unit 108, such as a keypad, for providing commands and program data to the device 100.

The device 100 contains a wireless communications interface 104 for enabling the device 100 to connect to a communications network 103, such as the internet, wirelessly, using Wi-Fi standards such as IEEE 802.11 b/g, or network protocols such as GPRS and 3G, including HSDPA and HSUPA. The wireless interface 104 may also permit local communications with a computer terminal 107 via Bluetooth or an infra-red link. In addition, the device 100 contains a wired communication interface 106 for permitting connection to a network or a computer terminal via an Ethernet cable or USB connection.

The communications interfaces 104, 106 are used by the device 100 to communicate with other devices, and to send and receive software applications, whose interfaces are to be displayed on the screen 105 of the device. Received applications are stored in the memory 102, and processed by the processing unit 109.

The components of the portable device 100 are connected via a bus 110.

The portable device 100 may be any of a number of electronic devices such as a mobile phone or PDA. Other circuitry required by dedicated functions of these devices is not shown in Figure 1 (such as an antenna used in making and receiving calls, or a battery).

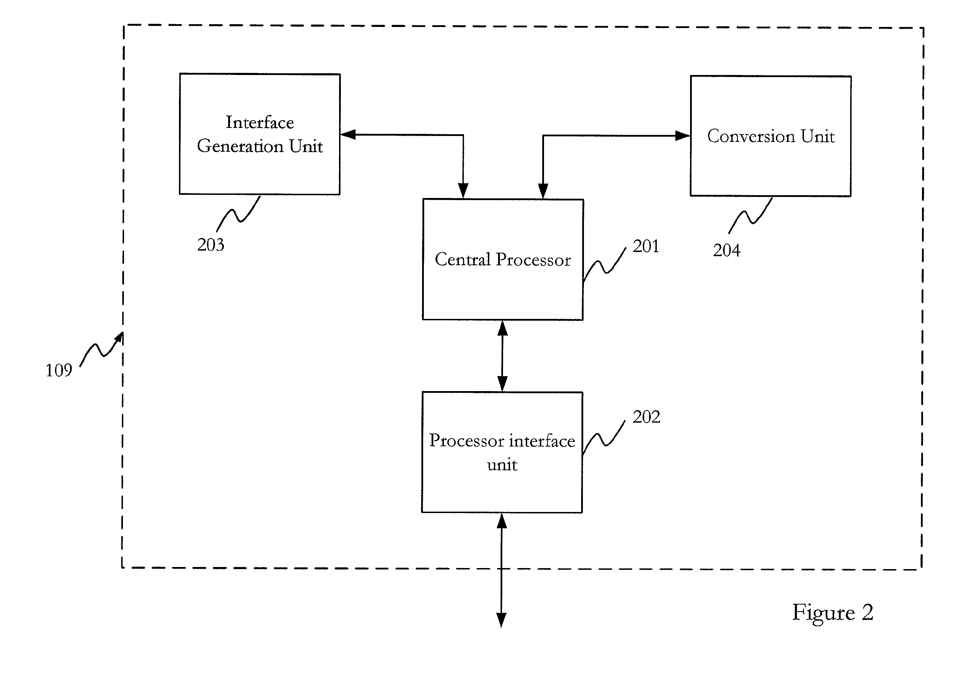

Figure 2 shows a schematic representation of the processing unit 109 of the device 100 in more detail. The processing unit 109 contains a central processor 201 which co-ordinates the various functions of the portable device 100, and the data flow between the components shown in Figure 1. Data output by the central processor 201 can be transferred to other components of the portable device 100 via an interface unit 202, which prepares data for transmission or reception via the bus 110. Examples of data which are received by the interface unit 202 are application data received either via one of the communication interfaces 104, 106, or the user input unit 108. Examples of data transmitted by the central processor 201 via the interface unit 202 are graphical data to be provided to the display screen 105, and program data which is to be stored in the memory 102.

Connected to the central processor 201 is an interface generation unit 203 which generates a graphical interface on the basis of application data received via the interface unit 202. A generated interface is provided to the central processor 201 which determines whether the generated interface has the correct size (relative to the size of the screen display 105, for example) for display, and if so, the central processor 201 provides the interface to the display screen 105 via the interface unit 202 and the bus 110.

Also connected to the central processor 201 is a conversion unit 204 which is used to convert the size of a generated interface to the size of the screen display 105 in the event the central processor 201 determines that there is a difference between these two sizes. In broad terms, the conversion unit 204 performs an image-processing operation on the interface, such as horizontal and/or vertical resizing operation, in a way in which the interactivity and the layout of the interface can be preserved, as described in more detail below.

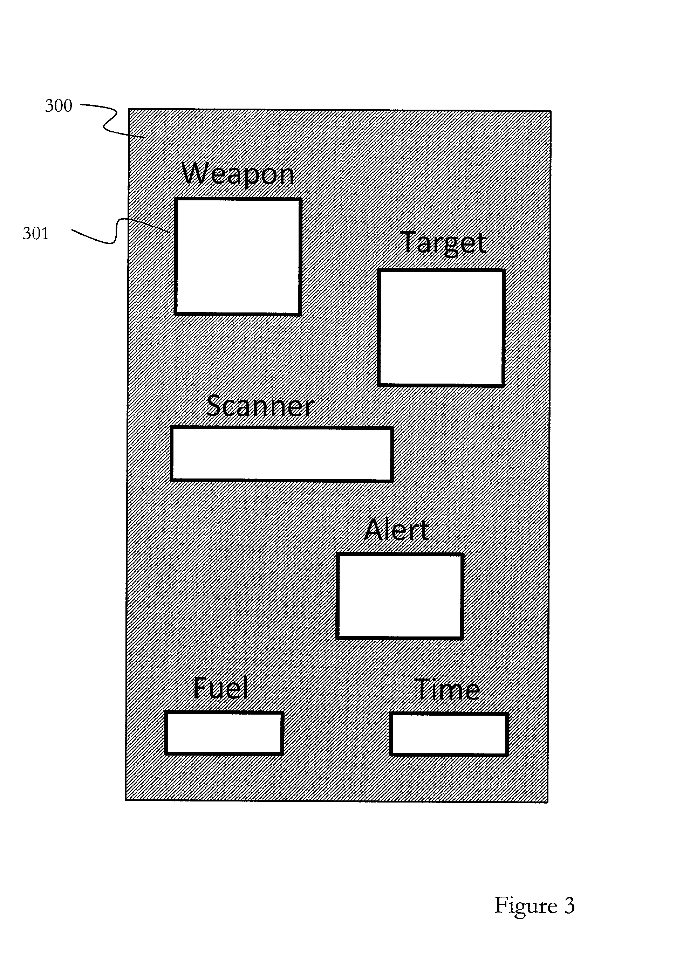

Figure 3 is a simplified example of a portion of a graphical interface 300 of a video game which is generated by the interface generation unit 203. The interface contains a number of elements 301 for displaying information (such as the time, or a fuel level), or enabling a user to interact with the game by entering data, such as a weapon selection in a combat game.

In the present embodiment, suppose the interface 300 of the game is generated by the interface generator 203 shown in Figure 2 to have a size of 176 x 202 pixels, a selection made by the video game designer. Suppose also that the display screen 105 of the device 100 has a size of 176 x 220 pixels, in other words, slightly longer in the vertical direction. It is therefore desirable to be able to scale the generate interface 300 so that it has a size of 176 x 220 pixels, making full use of the display screen size. A simple vertical stretch, however, may adversely affect the appearance of the new interface on the display 105, as the positions of the text and the interface elements 301 may no longer fit correctly with the pixel resolution of the screen 105.

In the present embodiment, this problem is addressed via the definition of "stretch lines" within the graphical interface. Stretch lines are portions of the interface containing pixel arrays the sizes of which can be adjusted in the horizontal and/or vertical direction by adding or removing pixels to/from the array during a vertical or horizontal scaling operation. Stretch lines therefore determine where an image can be stretched slightly without damaging the appearance of the originally-sized image. The pixel arrays may take the form of lines which are vertically or horizontally orientated, and the arrays may be one or two-dimensional, in dependence upon the thickness of the lines. A single, direct stretch line can be defined, or a multi-segment stretch line determining a path round graphical items that may not be stretched ("interaction zones", as described below) may also be defined.

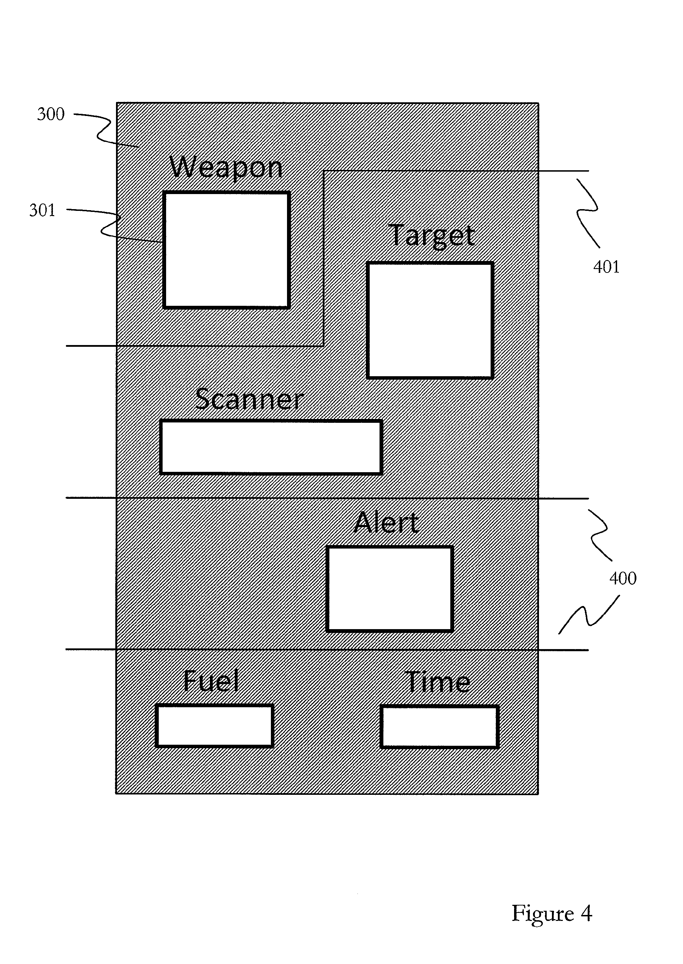

Figure 4 shows an example of the graphical interface 300 of Figure 3, with the addition of two simple horizontal stretch lines 400 and one complex horizontal stretch line 401. The extension of the lines beyond the edges of the sample graphic 300 is merely to indicate the end points of the lines, and is not part of the graphic itself.

Having defined these stretch lines 400, 401, the conversion unit 204 of the processing unit 109 resizes the interface by inserting extra pixels at the point of the stretch lines. In the example described, in order to stretch the image vertically from 202 pixels to 220 pixels, 18 pixels need to be inserted. This can be achieved by distributing the additional pixels across each of the stretch lines, either evenly, or with a weighted distribution at a preferred portion of the interface 300, such as the centre stretch lines, or peripheral stretch lines, dependent upon the application. For example, in the example shown in Figure 4, there are four horizontal portions of the stretch lines, so the 18 pixels to be generated can be made up of a four pixel insertion at the top and bottom stretch lines, with a five pixel insertion at the centre two stretch lines.

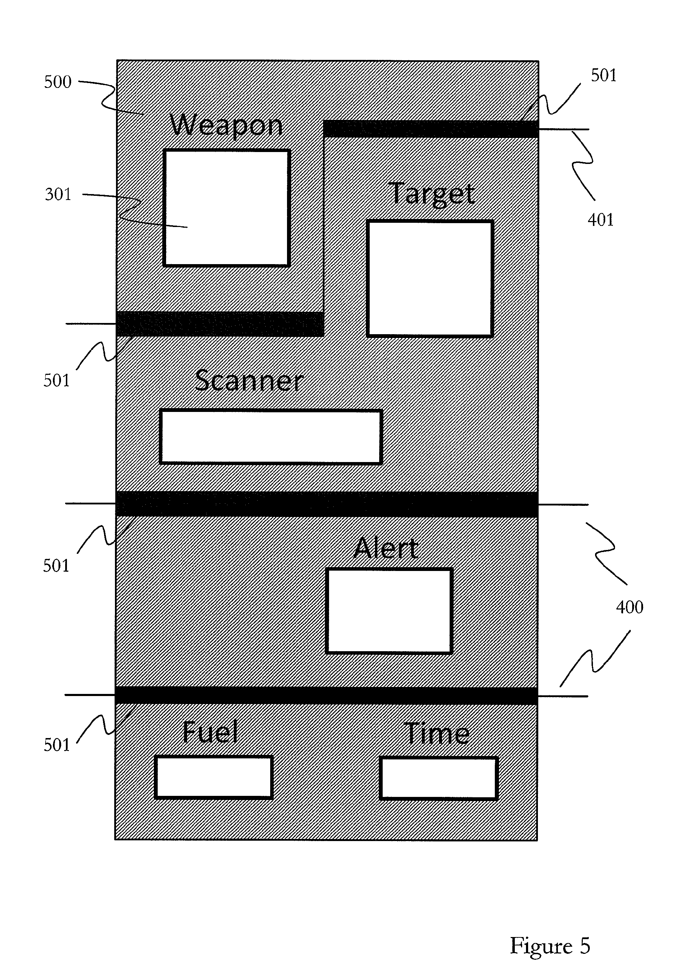

The result of the stretching is shown in Figure 5. The additional pixels are demonstrated by the widening of the stretch lines 501, but the interactive elements 301 of the resized interface 500 are unchanged.

The insertion of the additional pixels 501 can be centred on the vertical pixel location of the stretch lines (as shown in Figure 5), or in another embodiment, pixels can be inserted either upwardly or downwardly in the vertical direction from the stretch line location.

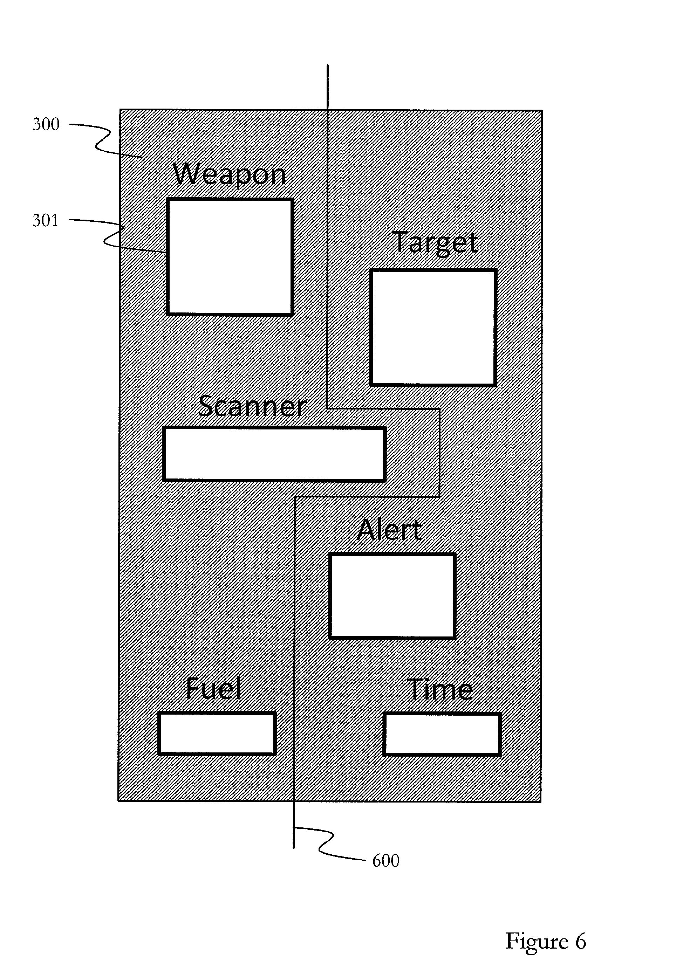

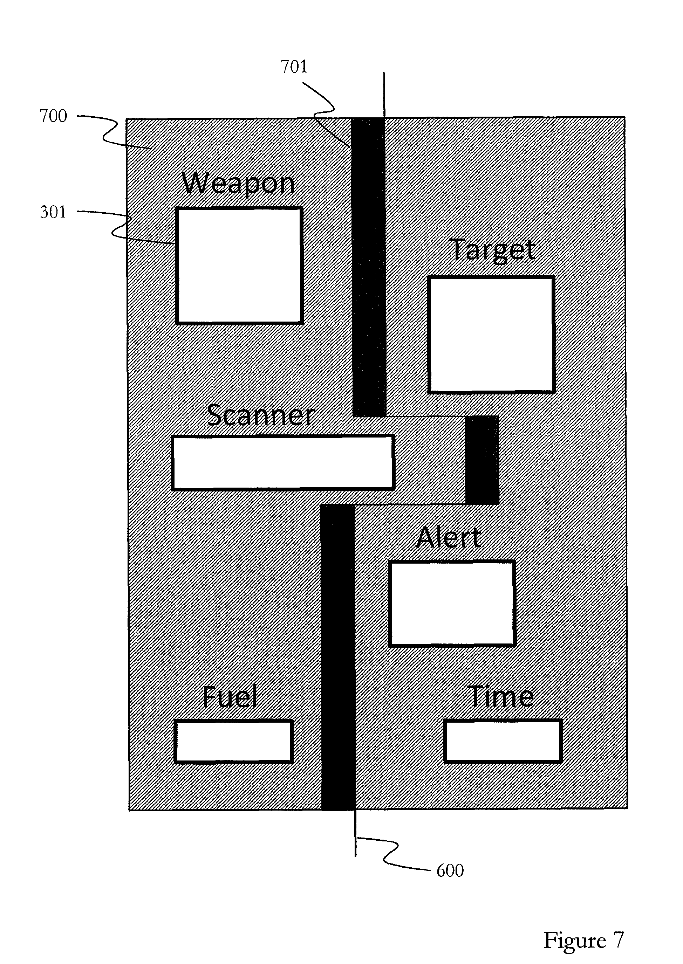

Figures 6 and 7 demonstrate further examples of stretch lines 600 and the insertion of pixels 701 at these locations. In the example shown in these Figures, vertical stretch lines 600 are defined, which are stretched horizontally. Insertion of pixels to the left of the stretch lines is shown in Figure 7. It will be appreciated that it is also possible to simultaneously perform a combination of vertical and horizontal resizing where a complex stretch line is defined.

The positions of the stretch lines may be specified in a configuration file which accompanies the software application from which the graphical interface was generated, so that for any given interface to be generated, the conversion unit 204 can identify positions in that interface at which the number of pixels can be adjusted in a resizing operation. The application is stored in the memory 102 of the device 100, either hard-coded by a developer, or received via one of the communication interfaces 104, 106 of the device 101 and stored, and the configuration file can be similarly received and stored.

The stretch lines may be configured by a software developer by manually applying a suitable graphics editing tool to an interface once the layout of the interface has been designed, with the configuration file storing the positions and orientations of the lines specified using the editing tool.

The stretch lines are abstract constructions to be laid over a graphical interface in positions determined either by the application designer (specified in the configuration file). It is not necessary that the stretch lines take any physical form in the graphical interface, such as being represented by the edges of various elements of the interface, but this may be preferable for certain situations.

In an alternative embodiment, instead of defining the stretch lines in advance of generating an interface, such as in a configuration file, stretch lines can be automatically identified from the generated graphical interface. The conversion unit 204 is capable of achieving this by scanning the pixels of the generated interface for the presence of a predetermined colour not used in any of the graphical elements, and the presence of this colour signifies a stretch line. In contrast to the abstract stretch lines described above, the stretch line of this embodiment may, due to its physical form in the graphical interface, be particularly suited to a situation where the interface is shrunk in order to match the display screen size, as described below, rather than a stretching operation. The stretch line would be deleted in this embodiment by removal of pixels of the predetermined colour, so that no artefacts would be present in the scaled image.

As a further alternative, stretch lines may be automatically generated with reference to positions of the elements of the graphical interface. An example would be a stretch line positioned half-way between two data-entry windows, or enclosing a particular portion of the interface.

The skilled person would appreciate that a number of other image-processing techniques could be used in order to identify one or more stretch lines in a graphical interface.

As the stretch lines may extend across a number of different areas of the interface, the underlying pixels may have a number of different colours. When pixels are inserted at the stretch lines, the pixels can be inserted by the conversion unit 204 so that they match the surrounding colours, in order to preserve the appearance of the interface. Black is shown in the Figures simply as a representative example showing the zone in which pixels are inserted.

In one embodiment, the colour matching is specified in the configuration file. This may be appropriate where a background colour of the interface is relatively uniform, and consequently easy to define. In another embodiment, more appropriate where the background colours are relatively complex and harder to specify in the configuration file, the underlying colours can be determined by the conversion unit 204 by using a similar method to the eyedropper tool of conventional graphics editing software, or by interpolating between two colours on either side of the stretch line.

In addition to determining the positions of stretch lines, embodiments of the present invention may also specify "interaction zones", the specification being performed using one or more of the same techniques as described with reference to the specification of the stretch lines above. The interaction zones are therefore predetermined graphical elements representing windows 301 present in an interface ready for display, as shown in Figures 3 to 7, or may be areas of the display reserved for insertion of additional elements at various future stages of the game or program.

In order to preserve the appearance and interactivity of the interface, the size of the interaction zones should not change on performing a resizing operation. This is ensured through appropriate selection of the stretch lines, but once stretching has been performed, the application needs to determine an updated location of the interaction zones so that the additional graphical components can be added when desired. This can be performed by the application specifying the location of an interaction zone in advance of resizing the interface and passing the information to the conversion unit 204. After the conversion unit 204 has completed resizing of the image it will return the updated interaction zone location information to the application.

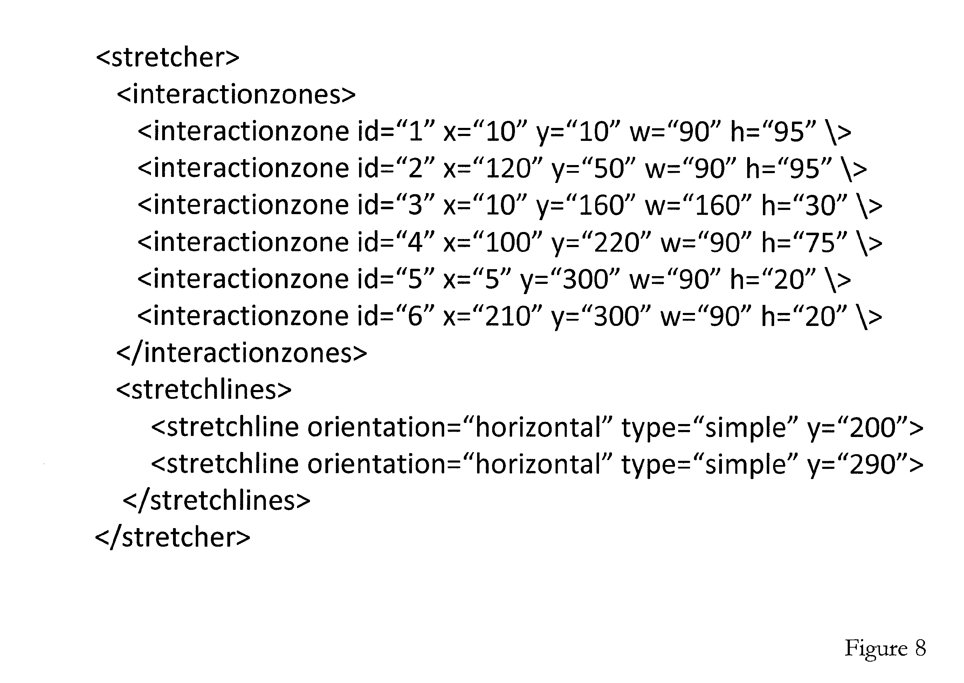

Figure 8 shows an example of a configuration file, which sets out the definitions of the position and form of the stretch lines and the interaction zones. In this embodiment, the configuration file takes the form of an XML (eXtensible Markup Language) file, a format which will be readily understood by those skilled in the art. In the configuration file, a reference number or similar identifier is allocated to each interaction zone to allow for interaction with the software application.

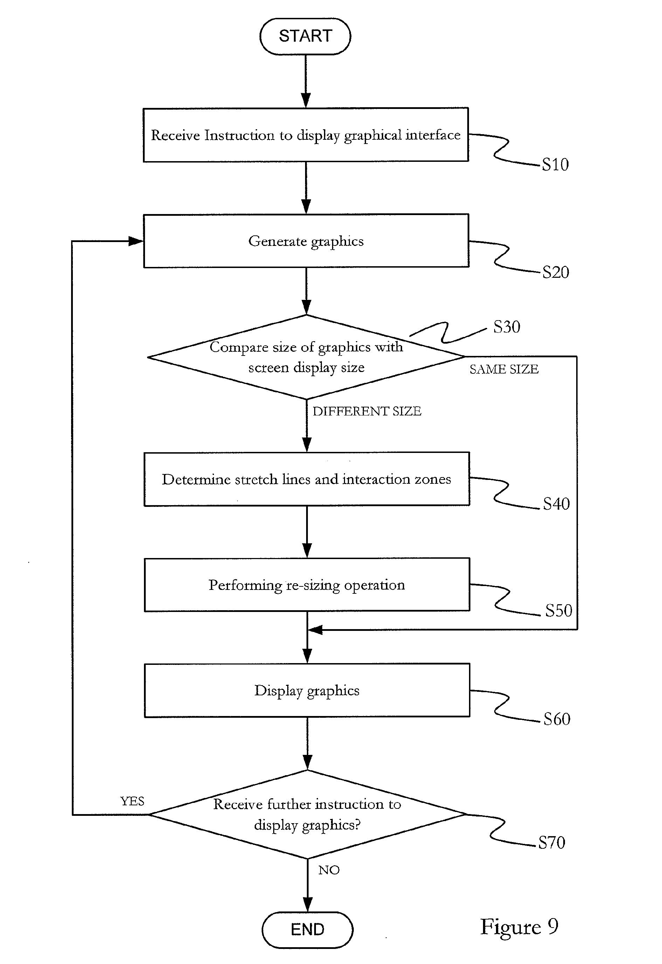

Figure 9 shows a flow chart which shows the operation of a device 100 performing resizing of a graphical interface according to an embodiment of the invention.

In step S10, the device 100 receives an instruction to display a graphical interface. The instruction may originate from the user, entered via the user input unit 108, or may be a process call such as that generated by the central processor 201 to instruct the interface generation unit to prepare the next frame of a video game.

In step S20, the interface generation unit 203 prepares the graphical interface 300, based on a set of executable instructions stored in the memory 102, transferred via the bus 110 and the processor interface unit 202. The interface 300 may be prepared in the form of a bitmap pixel array, or other format suitable for driving the black and white or colour display 105 of the portable device 100. The pixel array of the generated interface 300 has a size of *m₁* x *n₁* pixels.

In step S30, with the interface 300 ready for display, the central processor 201 compares the size of the generated interface 300 with the size of the display screen 105. The display screen 105 of the portable device 110 has a size of *m₂ x n₂* pixels, where *m₂ and n₂* may differ from *m₁* and *n₁* respectively. The size of the display may be stored in the memory 102, and the size may be updated based on changes made to the resolution, aspect ratio, or orientation of the display, by adjusting the operating settings of the device 100.

If it is determined in step S30 that *m₁*=*m₂* and *n₁*=*n₂*, it is determined that the generated interface 300 is of the correct size for optimal display by the portable device, and operation proceeds to step S60 in which the graphics are displayed.

If, however, it is determined in S30 that either or both *m₁*≠*m₂* and *n₁*≠*n₂* then it is determined that the generated interface 300 is not of the correct size for optimal display by the device 100, and operation proceeds to step S40 where conversion of the size of the interface is performed.

In step S40, the conversion unit 204 identifies the positions of stretch lines 400, 401, 600 and interaction zones 301 associated with the generated interface 300. As described above, this identification can be performed either by accessing a configuration file stored in the memory 102, or by determining these automatically with reference to pixel colour, or position with respect to graphical components of the interface 300.

In step S50, a resizing operation is performed by adding or removing pixels to/from the interface at the adjustable graphics portions provided at stretch lines. The operation to be performed is one which ensures that *m₁*=*m₂* and *n₁*=*n₂.* Accordingly, if *m₁<m₂*, a horizontal stretch is performed. If *n₁*<*n₂*, a vertical stretch is performed, and if both of these conditions are true, a combination of horizontal and vertical stretching is performed.

The stretching process involves the insertion of pixels at the stretch lines. As described above, this can be done by using a default colour (such as black, shown in the Figures), or by a technique such as interpolation of the colours of neighbouring pixels.

If, however, either *m₁*>*m₂* or *n₁*>*n₂*, a shrinking operation is performed. The shrinking operation is based on the reverse of the stretching operations described above, in that pixels are removed from the interface at the position of the stretch lines, rather than being added. In order to ensure that important components of the interface 300 are not inadvertently deleted in this process, a limit may be set for the degree to which the interface may be shrunk. This limit may be specified in the same way as the position of the stretch lines 400, 401, 600 and the interaction zones 301, and chosen in a way which enables an interface to be shrunk to as many conventional display sizes as is practically possible without deleting all of the space in between elements of the interface. The interaction zones, 301 as in the case of stretching operations, can be defined to be of fixed size, so that it can be ensured that pixels are not be removed from these areas during a shrinking operation.

At step S60, an interface 500, 700 is available, having size *m₂* x *n₂* pixels, for display by the portable device 100. The interface 500, 700 is provided to the display 105 via the processor interface unit 202 and displayed.

At step S70, it is determined whether a new instruction to display graphics has been received, either from a new process call from the operating software, or as a result of a user input causing a new menu screen to be generated, for example. If there is a new instruction, the process returns to step S20. Otherwise, the display process terminates until a new process is triggered at step S10.

As described above, the invention is primarily applicable to portable devices, such as mobile phones, portable games consoles, PDAs, and the like, which are available with a number of different screen sizes, largely dependent upon the individual design profile of the device (for example, slide phones, flip-lid phones, and so on). These devices contrast from devices such as PCs and laptop computers, which conventionally have a smaller number of available screen sizes (for example 1280 x 1024 is a very common specification of a laptop computer screen size, and so a large number of applications are designed to run on this screen size). However, this is not to say that the principles of the present invention cannot be applied to these larger devices as well, and the invention may find particular use where a computer monitor display is manually divided into a number of windows of user-defined size, for example, so that resizing may become necessary. In these circumstances, the method of the present invention could be performed by a computer program stored at the terminal, on a carrier such as a disk, or downloaded to the computer via the internet.

The invention has great benefit where relatively small scaling operations are required, such as the example described above where a change from 176 x 202 to 176 x 220 pixels is made. This means that the adjustment of the size of the graphics at the stretch lines is sufficient to change the overall size of the interface by the required amount, and is another reason for the applicability of the invention to portable devices. Where a larger scaling operation is required, this can either be performed in the same way, based on pixel adjustment at the stretch lines, or can be performed in conjunction with a conventional scaling of various elements of the interface, so that the interface does not appear with relatively small components separated by large spaces (due to large degrees of pixel insertion at the stretch lines).

The skilled person will appreciate that a number of modifications may be made to the method and apparatus described without departing from the scope of the invention, as defined by the appended claims.

## Claims

1. A method of displaying a graphical interface on a device, comprising:
generating a graphical interface;
determining whether the generated interface has a size different from the size of the display of the device; and
determining an adjustable portion of the generated interface having a pixel array the size of which can be changed in the horizontal and/or vertical direction, and converting the size of the generated interface to the display size by adding/removing pixels to/from the adjustable portion of the interface, if it is determined that the size of the generated interface is different from the display size.

2. A method according to claim 1 in which the adjustable portion of the interface is a horizontal or vertical line, in which the vertical width of a horizontal line can be adjusted and the horizontal width of a vertical line can be adjusted.

3. A method according to claim 1 or claim 2 in which the adjustable portion is determined by identifying a predetermined colour in the generated interface.

4. A method according to any one of the preceding claims further comprising specifying the position of a predetermined graphical element of the interface at which the number of pixels cannot be changed when a resizing operation is applied to the interface.

5. A method according to claim 4 in which the predetermined graphical element is a user interaction zone of the interface.

6. A method according to claim 5 in which the adjustable portion extends between two user interaction zones.

7. A method according to claim 5 or claim 6 comprising storing a definition of the positions of the adjustable portion and interaction zones in a configuration file at the device.

8. A method according to any one of the preceding claims in which pixels are added to the adjustable portion in a stretching operation having the same colour as neighbouring pixels of the interface.

9. An apparatus for displaying a graphical interface having a plurality of elements, comprising:
a display;
means for generating a graphical interface; and
means for converting the size of the generated graphical interface to the size of the display;
in which the conversion means is arranged to:
determine an adjustable portion of the generated interface having a pixel array the size of which can be changed in the horizontal and/or vertical direction, and
change the size of the interface to the display size by adding/removing pixels to/from the adjustable portion of the interface.

10. An apparatus according to claim 9 in which the conversion means is arranged to determine the presence of an adjustable portion of the interface by detecting a predetermined colour in the graphical interface.

11. An apparatus according to claim 9 further comprising means for receiving and storing application data from a network or terminal, the application data comprising information to enable the generating means to generate a graphical interface, and a configuration file defining the position of the adjustable portion in the graphical interface.

12. An apparatus according to any one of claims 9 to 11 in which the conversion means is arranged to add pixels to the adjustable portion in a stretching operation, having the same colour as surrounding pixels.

13. A mobile phone comprising the apparatus of any one of claims 9 to 12.

14. A system comprising:
a mobile phone according to claim 13.
means for specifying an adjustable portion of a graphical interface at which the number of pixels can be changed in a horizontal and/or vertical resizing operation; and
means for specifying the position of a predetermined graphical element of the interface at which the number of pixels cannot be changed in the resizing operation.

15. A computer program which, when executed by a processor, is arranged to perform the method of any one of claims 1 to 8.
